# EUROPÄISCHE PATENTSCHRIFT

(11) **EP 1 737 654 B1**
(45) Veröffentlichungstag und Bekanntmachung des Hinweises auf die Patenterteilung: **09.12.2015**
(21) Anmeldenummer: 05732519.3
(22) Anmeldetag: 13.04.2005
(51) Int. Cl.: B32B 27/40, C08F 299/06, B29C 37/00, C09D 175/16, B29C 63/22

(54) **FLEXIBLER SCHICHTVERBUND MIT EINEM TRÄGER UND EINER DARAUF AUFGEBRACHTEN SCHICHT HÄRTBAREN LACKES**
FLEXIBLE LAMINATED COMPOSITE COMPRISING A SUBSTRATE AND A LAYER APPLIED THERETO WHICH CONSISTS OF A CURABLE LACQUER
COMPOSITE LAMINE FLEXIBLE POURVU D'UN SUPPORT ET D'UNE COUCHE DE VERNIS DURCISSABLE APPLIQUEE SUR LE SUPPORT

(30) Priorität: 16.04.2004 DE 102004019460; 05.11.2004 DE 102004055363
(43) Veröffentlichungstag der Anmeldung: 03.01.2007
(73) Patentinhaber: KARL WÖRWAG LACK- UND FARBENFABRIK GMBH & CO. KG, 70435 Stuttgart (DE)
(72) Erfinder: ORTMEIER, Jürgen, 73230 Kirchheim (DE); KLEIN, Ottfried, 73733 Esslingen (DE); DJUNAIDI, Terry, 71229 Leonberg (DE)
(74) Vertreter: Patentanwälte Ruff, Wilhelm, Beier, Dauster & Partner mbB
(86) Internationale Anmeldenummer: PCT/EP2005/003866
(87) Internationale Veröffentlichungsnummer: WO 2005/099943

(56) Entgegenhaltungen:
- WO-A-2005/080484
- DE-A1- 10 140 769
- DE-A1- 19 917 965
- US-B1- 6 258 441
- SCHWALM R: "CROSSLINKING EFFECT ON MECHANICAL PROPERTIES OF UV CURABLE COATINGS" PPCJ. POLYMERS PAINT COLOUR JOURNAL, FMJ INTERNATIONAL, REDHILL, GB, Bd. 189, Nr. 4421, Oktober 1999 (1999-10), Seiten 18-20,22, XP008009160 ISSN: 1357-731X

## Beschreibung

Die Erfindung betrifft einen flexiblen Schichtverbund mit einem Träger und mindestens einer auf den Träger aufgebrachten Schicht härtbaren Lackes sowie Verwendungen eines solchen Schichtverbundes. Ferner betrifft die Erfindung mit diesem Schichtverbund beschichtete dreidimensionale Formkörper.

Konventionelle Lackierungen, insbesondere konventionelle Kraftfahrzeuglackierungen, bestehen gewöhnlich aus mehreren, übereinander liegenden Lackschichten. Verfahrensbedingt ist es jedoch häufig schwierig, exakt farbgleiche Beschichtungen z. B. auf unterschiedlichen Substraten wie Blech oder Kunststoff zu erzielen. Auch bei gleichen Substraten resultieren unterschiedliche Farbnuancen schon aus minimalen Änderungen der eingesetzten Lackkomponenten oder eines Verfahrensschritts.

Zur Lösung dieser Probleme kommen an Stelle konventioneller Lackierungen mehrschichtige Verbünde mit einer auf einen Träger aufgebrachten Schicht härtbaren Lackes zur Beschichtung der jeweiligen Substrate in Betracht. Insbesondere sogenannte Lackfolien, bei denen es sich bei dem Träger um eine Folie handelt, sind hier zu nennen. Bei der Applikation dieser Lackfolien entsteht eine Lackierung mit einem substrat- und verfahrensunabhängigen Farbton, was das Farbqualitätsmanagement beispielsweise im Automobilbau, wo gewöhnlich fertig lackierte Einzelkomponenten von unterschiedlichen Zulieferern bezogen werden, erheblich vereinfacht. Ein weiterer Vorteil bei der Verwendung von Lackfolien liegt darin, daß bei ihrer Applikation keine Lösungsmittelemissionen auftreten bzw. diese vergleichsweise gering sind.

Aus der WO 00/13893 sind mit mehreren Schichten beschichtete Lackfolien bekannt, wobei die Oberfläche einer Kunststoff-Folie A mit mindestens einer Lackschicht lackiert ist und die Lackschicht gegebenenfalls mit einer weiteren thermoplastischen Kunststoff-Folie B beschichtet ist. Die Kunststoff-Folie A ist gegebenenfalls von der auf ein Substrat applizierten und ausgehärteten Lackschicht abziehbar, so daß nur die Lackschicht auf dem Substrat verbleibt. Der eingesetzte Lack weist ein Bindemittel auf Polyester-, Polyurethan- oder Polyacrylat-Basis sowie ein Vernetzungsmittel (ein Aminoplastharz, ein Polyisocyanatharz oder ein carboxylgruppenhaltiges Vernetzungsmittel) auf.

Aus der EP 361 351 A1 ist ein Verfahren bekannt, nach dem eine Lackfolie aus einer Trägerfolie, einer Kleberschicht und einer Lackschicht auf dreidimensionale gewölbte Flächen aufgebracht werden kann. Dabei wird zum Schutz vor Verunreinigungen die strahlungshärtbare Lackschicht der Lackfolie durch Strahlung teilgehärtet, so daß sie staubtrocken ist. Anschließend wird die Lackfolie erwärmt und appliziert. Nach der Applikation erfolgt auf thermischem Weg eine Endhärtung der Lackschicht.

In der EP 0 819 520 A2 wird ein Verfahren zum Applizieren einer Lackfolie mit mindestens einer Lack- und einer Kleberschicht auf dreidimensionale gewölbte Flächen beansprucht, bei dem die strahlungshärtbare Lackschicht der Lackfolie vor dem Aufbringen auf die gewölbte Fläche staubtrocken teilgehärtet und nach dem Aufbringen endgehärtet wird. Dabei erfolgt die Endhärtung der Lackschicht durch elektromagnetische Strahlung mit einer Wellenlänge unterhalb der Wellenlänge des sichtbaren Spektrums. Zur Applikation der Lackfolie auf das Substrat wird die Lackschicht vorzugsweise auf ihre Glasübergangstemperatur T_{g} oder geringfügig darüber erhitzt, um die Lackfolie blasen-, falten- und orangenhautfrei applizieren zu können. Deshalb wurde ein Lack mit einer Glasübergangstemperatur T_{g} von unter 40 °C, insbesondere unter 30 °C, gewählt. Der eingesetzte Lack weist ein Bindemittel auf Phospacen-, Urethan- oder Acrylat-Basis auf.

Ein bei diesen Verfahren grundsätzlich auftretendes Problem betrifft die Anfälligkeit der eingesetzten Lackfolien für Verunreinigungen, insbesondere für Staub. Vom Zeitpunkt ihrer Herstellung bis zu ihrer Verarbeitung können Wochen bis Monate vergehen. Kommt die Lackoberfläche in diesem Zeitraum mit Verunreinigungen in Kontakt, so führt das häufig zu unerwünschten optischen Störungen der Lackoberfläche. Verunreinigungen aller Art sind aus diesem Grund unbedingt zu vermeiden. Dies stellt in der Praxis hohe Anforderungen an die Reinheit in Lager- und Produktionsstätten.

Als Maßnahme zur Reduzierung dieser Probleme ist es möglich, die Lackschicht einer Lackfolie während oder direkt nach ihrer Herstellung mit einer Schutzabdeckung oder -folie zu versehen.

Aus der US 6,258,441 B1 ist ein weicher Überzugsfilm für den Schutz von Oberflächen elektrischer Geräte und Möbel bekannt, welcher einen Trägerfilm, beispielsweise aus Polyester, sowie eine auf diesen aufgebrachte Harzschicht umfasst. Die Ausbildung der Harzschicht erfolgt durch Behandlung einer auf den Trägerfilm aufgebrachte Zusammensetzung mit ionisierender Strahlung, wobei die Zusammesetzung als wesentliche Komponenten ein Urethanacrylat sowie einen Griffverbesserer aus Wachsen, Silizium- und Fluorkohlenwasserstoffharzen aufweist.

Aus der DE 101 40 769 A1 sind Lackfolien bekannt, bei denen eine Polypropylenfolie eine Klarlackschicht aufweist, auf der wiederum eine Farblackschicht aufgebracht ist. Um eine rückstandsfreie Wiederentfernbarkeit der Lackfolie vom Substrat zu gewährleisten, wurde auf der Farblackschicht eine Klebstoffschicht aufgebracht, über die wiederum eine sogenannte Armierungsfolie kaschiert wurde. Auf die Armierungsfolie wurde zwecks Abdeckung bis zur Verarbeitung eine sogenannte Releasefolie laminiert. Um eine ausreichende Haftung der Releasefolie auf dem Verbund zu gewährleisten, ist der Einsatz einer weiteren Klebstoffschicht zwischen Release- und Armierungsfolie erforderlich.

Allgemein ist ein Einsatz von Schutzfolien, deren Verwendung mit dem Einsatz von Klebstoffen verbunden ist, unter mancherlei Hinsicht nicht optimal. Beim Entfernen der Schutzfolie ist es gegebenenfalls wünschenswert, daß insbesondere die darunter liegende Klebstoffschicht rückstandsfrei mit entfernbar ist. In der Praxis können hierbei Schwierigkeiten auftreten. Zudem erfordert das Aufbringen einer Schutzfolie mittels Klebstoff auf eine zu schützende Lackschicht einen zusätzlichen Verfahrensschritt.

Lacke mit hohen T_{g}-Werten sind grundsätzlich unempfindlicher gegenüber Verunreinigungen, ein Schützen des Lackes ist dann nicht zwingend notwendig.

Die DE 199 17 965 beschreibt eine strahlungshärtbare Verbundschichtplatte oder -folie aus mindestens einer sogenannten Substratschicht und einer sogenannten Deckschicht, wobei die Deckschicht aus einer strahlungshärtbaren Masse besteht, die ein Bindemittel mit einer solch hohen Glasübergangstemperatur T_{g} von über 40 °C, bevorzugt über 50 °C, insbesondere über 60 °C, enthält. Entsprechend wird das Aufbringen einer Schutzschicht als rein fakultative Maßnahme erwähnt.

Auch die WO 2005/080484 A1 hat eine Verbundschichtplatte oder -folie aus mindestens einer Substratschicht und einer Deckschicht zum Gegenstand, wobei die Deckschicht aus einer strahlungshärtbaren Masse besteht, die ein Bindemittel mit einer Glasübergangstemperatur < 50 °C und einem Doppelbindungsanteil > 2 mol/kg Bindemittel enthält. In einer bevorzugten Ausführungsform liegt die Glasübergangstemperatur dieses Bindemittels unterhalb von 20 °C, insbesondere unterhalb von 10 °C. Das Aufbringen einer Schutzschicht wird ebenfalls als rein fakultatives Merkmal erwähnt.

Der Einsatz von Lacken, die Bindemittel mit hohen Glasübergangstemperaturen T_{g} enthalten, weist aber auch Nachteile auf. Das Applizieren einer Lackfolie erfolgt vorzugsweise bei erhöhten Temperaturen, insbesondere bei Temperaturen oberhalb der Glasübergangstemperatur T_{g} des strahlungshärtbaren Bindemittels. Zu hohe T_{g}-Werte resultieren in einem schlechten Handling des physikalisch getrockneten Lackfilms bei Raumtemperatur. Der Lack ist dann zu spröde, insbesondere besitzt er keine Tiefziehfähigkeit und neigt zur Rißbildung.

Die Erfindung stellt sich dementsprechend die Aufgabe, einen Schichtverbund bereitzustellen, der eine Lösung für die angesprochenen Problerne darstellt. Das Hauptaugenmerk liegt dabei auf der Bereitstellung eines Schichtverbundes mit einer Lackschicht, die im Hinblick auf den Schutz vor Verunreinigungen, insbesondere in Bezug auf das Aufbringen einer Schutzfolie, besonders vorteilhafte Eigenschaften aufweist.

Zur Lösung dieser Aufgabe schlägt die Erfindung einen Schichtverbund mit den Merkmalen des Anspruchs 1 vor. Bevorzugte Ausführungsformen des erfindungsgemäßen Gegenstands gemäß Anspruch 1 sind in den abhängigen Ansprüchen 2 bis 18 beschrieben. Auch die Verwendungen des erfindungsgemäßen Schichtverbunds gemäß den unabhängigen Ansprüchen 19 und 22 sind Gegenstand dieser Erfindung. Eine bevorzugte Ausführungsform der erfindungsgemäßen Verwendung gemäß Anspruch 19 ist in Anspruch 20 dargestellt. Ebenfalls Erfindungsgegenstand sind dreidimensionale Formkörper mit den Merkmalen des Anspruchs 21. Der Wortlaut sämtlicher Ansprüche wird hiermit durch Bezugnahme zum Inhalt dieser Beschreibung gemacht.

Ein erfindungsgemäßer Schichtverbund weist einen Träger sowie mindestens eine auf den Träger aufgebrachte Schicht härtbaren Lackes auf. Dabei enthält die Schicht härtbaren Lackes ein Bindemittel, das sich dadurch auszeichnet, daß es eine Doppelbindungsdichte zwischen 3 mol/kg bis 6 mol/kg, eine Glasübergangstemperatur T_{g} zwischen -15 °C bis 20 °C und einen Festkörperanteil zwischen 40 % und 100 % aufweist.

Insbesondere der Glasübergangstemperatur T_{g} kommt im Hinblick auf den Schutz der Schicht härtbaren Lackes vor Verunreinigungen eine besondere Bedeutung zu, auf die in der Folge noch näher eingegangen wird.

Gegebenenfalls weist die Schicht härtbaren Lackes mindestens ein Lack-Hilfsmittel, vorzugsweise eine Lack-Hilfsmittelkombination, auf. Die Lack-Hilfsmittelkombination kann alle handelsüblichen Hilfsmittel enthalten, die zur Herstellung von Lacken außer den Lackrohstoffen benötigt werden, insbesondere Hilfsmittel, die zur Einstellung und Stabilisierung der Eigenschaften von Lacken dienen. Beispiele hierfür sind Photoinitiatoren wie z. B. α-Hydroxyalkylphenone oder Acylphosphinoxide (z. B. Irgacure 184, Irgacure 819), Lichtschutzmittel wie handelsübliche UV-Absorber wie Hydroxybenzophenone, Benzotriazole, Oxalanilide und Radikalfänger wie sterisch gehinderte Amine (HALS), Oberflächenadditive wie Verlaufsmittel und Entschäumer (z. B. TegoGlide 435, Byk 051), Emulgatoren und Netz- und Dispergiermittel.

Weitere fakultative Komponenten der Schicht härtbaren Lackes sind
- Lösungsmittel und
- Pigmente und/oder Füllstoffe.

Als Pigmente können sowohl anorganische als auch organische Pigmente zugesetzt werden. Als Füllstoffe kommen alle dem Fachmann bekannte entsprechende Zusätze wie z. B. Kieselgele oder Talkum in Betracht. Vorzugsweise handelt es sich bei der Schicht härtbaren Lackes aber um einen Klarlack.

Wird die Schicht härtbaren Lackes getrocknet, insbesondere thermisch getrocknet, so ist die aus der Trocknung resultierende (nur teilgehärtete) Lackschicht nicht klebrig.

Bei dem Bindemittel handelt es sich um ein Bindemittel auf Basis von Urethanacrylat.

Besonders bevorzugt handelt es sich bei dem Bindemittel um eines, das eine Glasübergangstemperatur T_{g} zwischen -10 °C und 12 °C aufweist.

In einer besonders bevorzugten Ausführungsform ist das 100 %ige Bindemittel ein Feststoff (Festkörperanteil des Bindemittels 100 %).

Durch den vergleichsweise niedrigen Tg-Wert kann eine Anfälligkeit der Schicht härtbaren Lackes für Verunreinigungen, insbesondere für Staub, vorhanden sein. Demzufolge weist ein erfindungsgemäßer Schichtverbund mindestens eine entfernbare Schutzfolie auf der Schicht härtbaren Lackes auf.

Bei der Herstellung eines erfindungsgemäßen Schichtverbunds erfolgt nach dem Aufbringen der Schicht härtbaren Lackes eine oberflächliche Trocknung der aufgebrachten Schicht härtbaren Lackes, üblicherweise bei Temperaturen zwischen 70 °C und 120°C, vorzugsweise zwischen 100 °C und 120 °C.

Überraschenderweise wurde gefunden, daß die Schicht härtbaren Lackes nach dieser Trocknung in Bezug auf das Aufbringen vorzugsweise einer Schutzfolie besonders vorteilhafte Eigenschaften aufweist, wenn als Bindemittel ein Bindemittel verwendet wird, das eine Glasübergangstemperatur T_{g} im Bereich zwischen -15 °C und 20 °C aufweist, insbesondere zwischen -10 °C und 12 °C. Trotz der oberflächlichen Trocknung ist eine entfernbare Schutzfolie problemlos auf die Lackoberfläche aufbringbar und haftet auf der Schicht härtbaren Lackes, ohne daß es des Einsatzes von Klebstoffen bedarf. Ebenso überraschend wurde festgestellt, daß eine so aufgebrachte Schutzfolie trotz der erwähnten guten Haftung problemlos von der Schicht härtbaren Lackes wieder abziehbar ist. Nach dem Abziehen befindet sich die freigelegte Lackschicht in hervorragendem optischem Zustand, es resultiert eine spiegelglatte Oberfläche.

Vorzugsweise weist eine entfernbare Schutzfolie eine Dicke zwischen 10 µm und 100 µm, insbesondere zwischen 20 µm und 60 µm, auf. Dabei ist es insbesondere günstig, wenn es sich bei der entfernbaren Schutzfolie um eine einschichtige oder mehrschichtige Folie handelt.

Gewöhnlich handelt es sich bei der entfernbaren Schutzfolie um eine Kunststoff-Folie, insbesondere um eine Folie auf Basis von Polyestern, Polyolefinen, Polycarbonaten, Acrylnitril-Butadien-Styrol (ABS), Acryl-Styrol-Acrylnitril (ASA), Acrylnitril-Butadien-Styrol/Polycarbonat (ABS/ PC), Acryl-Styrol-Acrylnitril/Polycarbonat (ASA/PC), Polycarbonat/Poly-butylenterephtalat (PC/PBT) oder anderen dem Fachmann bekannten geeigneten Kunststoffen oder Mischungen derselben. Besonders bevorzugt ist eine Schutzschicht auf Basis von Polyethylenterephtalat.

Unter Umständen ist aber auch der Einsatz von Schutzfolien aus anderen Materialien als Kunststoff wie z. B. aus Metall, denkbar.

Erwähnenswert ist auch, daß es möglich ist, über die Schutzfolie Strukturen auf die Lackoberfläche zu übertragen. Dazu kann auf der Schutzfolie ein entsprechendes Negativmuster aufgearbeitet sein.

Weiterhin kann es vorteilhaft sein, die Schutzfolie so auszugestalten, daß sie licht- und/oder UV-undurchlässig ist.

Genauso vorteilhaft kann es sein, die Schutzfolie derart auszugestalten, daß sie licht- und/oder UV-durchlässig ist. Derart ausgestaltet ist es dann beispielsweise möglich, unter der Schutzfolie liegende Schichten durch die Schutzfolie hindurch zu belichten bzw. zu bestrahlen. Die Entfernung der Schutzfolie kann dann erst nach Abschluß dieser Prozesse vorgenommen werden.

In einer bevorzugten Ausführungsform weist ein erfindungsgemäßer Schichtverbund als Träger ebenfalls eine einschichtige oder mehrschichtige Folie auf. Auch bei dieser (Träger)-Folie handelt es sich bevorzugt um eine Kunststoff-Folie, besonders bevorzugt um eine tiefziehbare Kunststoff-Folie, insbesondere auf Basis von Polyolefinen, Polycarbonaten, Acrylnitril-Butadien-Styrol (ABS), Acryl-Styrol-Acrylnitril (ASA), Acrylnitril-Butadien-Styrol/Polycarbonat (ABS/PC), Acryl-Styrol-Acrylnitril/Polycarbonat (ASA/PC), Polycarbonat/Polybutylenterephtalat (PC/ PBT) oder anderen dem Fachmann bekannten geeigneten Kunststoffen oder Mischungen derselben.

Vorzugsweise wird als Träger eine Folie mit einer Dicke im Bereich zwischen 100 µm und 1500 µm, insbesondere zwischen 200 µm und 1300 µm, gewählt.

In manchen Fällen kann es bevorzugt sein, daß die (Träger)-Folie Pigmente enthält, insbesondere farbig ist. Zusätzlich oder stattdessen kann die (Träger)-Folie wie schon die Schutzfolie handelsübliche Füllstoffe enthalten.

In einer bevorzugten Ausführungsform eines erfindungsgemäßen Schichtverbundes ist die Schicht härtbaren Lackes, die auf dem Träger aufgebracht ist, mindestens teilweise thermisch härtbar. Genauso bevorzugt ist es, daß die Schicht härtbaren Lackes mittels Strahlung, bevorzugt mittels elektromagnetischen Strahlung, insbesondere mittels UV-Strahlung, mindestens teilweise härtbar ist. Auch der Einsatz von Elektronen-Strahlung ist möglich.

Besonders bevorzugt ist es, daß die Schicht härtbaren Lacks sowohl auf thermischem Weg als auch durch elektromagnetische Strahlung mindestens teilhärtbar ist.

Die Schicht härtbaren Lackes auf dem Träger weist vorzugsweise eine Dicke zwischen 10 µm und 150 µm, insbesondere zwischen 30 µm und 70 µm, auf.

Bei einer bevorzugten Ausführungsform des erfindungsgemäßen Schichtverbunds ist die Schicht härtbaren Lackes direkt auf den Träger aufgebracht. Dies kann insbesondere dann der Fall sein, wenn es sich bei dem Träger um eine farbige (Träger)-Folie handelt oder wenn der Träger eine farbige Folie aufweist.

Gleichermaßen ist es jedoch bevorzugt, daß sich zwischen dem Träger und der Schicht härtbaren Lackes mindestens eine weitere Lackschicht, insbesondere eine farb- und/oder effektgebende Lackschicht, befindet.

Bei dieser weiteren Lackschicht handelt es sich bevorzugt um einen Lack auf Wasserbasis. Grundsätzlich muß ein solcher geeigneter Lack, abhängig vom Verarbeitungsprozeß, rakel-, spritz- und/oder pumpfähig sein. Geeignete Lacke sind thermoverformbar, vorzugweise auch im Bereich zwischen 120 °C und 210 °C. Insbesondere weisen sie eine hohe thermische Stabilität auf. Im Verlauf des Prozesses tritt keine signifikante Farbänderung auf.

Ein erfindungsgemäßer Schichtverbund ist bevorzugt, wenn er eine Schichtfolge aufweist, in der auf einen Träger mindestens eine Schicht härtbaren Lackes aufgebracht ist, auf welche wiederum mindestens eine entfernbare Schutzfolie aufgebracht ist. In Weiterbildung ist ein Schichtverbund dann besonders bevorzugt, wenn er genau eine Schicht härtbaren Lackes sowie eine entfernbare Schutzfolie aufweist.

Eine ebenso bevorzugte Ausführungsform eines erfindungsgemäßen Schichtverbunds weist eine Schichtfolge auf, in der auf einen Träger mindestens eine weitere Lackschicht, insbesondere mindestens eine farb- und/oder effektgebende Lackschicht, aufgebracht ist, auf der sich mindestens eine Schicht härtbaren Lackes befindet, auf die wiederum mindestens eine entfernbare Schutzfolie aufgebracht ist. In Weiterbildung ist auch in diesem Fall ein Schichtverbund dann besonders bevorzugt, wenn er genau eine Schicht härtbaren Lackes sowie eine entfernbare Schutzfolie aufweist.

Es ist bevorzugt, daß der Schichtverbund zur einseitigen Applikation vorgesehen ist, vorzugsweise auf der der aufgebrachten Schicht härtbaren Lackes abgewandten Seite des Trägers. Die Applikation erfolgt bevorzugt durch Hinterspritzen oder Hinterschäumen aber auch durch Verklebung.

Besonders bevorzugt ist der erfindungsgemäße Schichtverbund zur vollflächigen Applikation vorgesehen, es ist aber auch eine Aufbringung auf ein Substrat mittels stellenweiser Applikation möglich.

Ein erfindungsgemäßer Schichtverbund findet bevorzugt Verwendung zur Beschichtung von dreidimensionalen Formkörpern. Insbesondere ist es vorgesehen, daß es sich bei dem dreidimensionalen Formkörper um eine Fahrzeugkarosserie oder ein Teil hiervon, ein Fahrzeuganbauteil, Fahrzeugscheiben oder Fahrzeuginnenteile handelt. Grundsätzlich lassen sich jedoch alle Substrate mit vorzugsweise glatten Oberflächen mit dem erfindungsgemäßen Schichtverbund versehen, so z. B. Transporteinrichtungen wie Eisenbahnwagons oder die Schalen oder Hüllen elektronischer Geräte wie z. B. Mobilfunkgeräte.

Demzufolge sind auch alle dreidimensionalen Formkörper, die mit einen erfindungsgemäßen Schichtverbund beschichtet sind, Gegenstand dieser Erfindung.

Eine weitere bevorzugte Verwendung eines erfindungsgemäßen Schichtverbunds ist dessen Einsatz in einem mehrstufigen Applikationsverfahren mit den folgenden Schritten:
- Entfernen, vorzugsweise Abziehen der Schutzfolie von der Schicht härtbaren Lackes,
- Thermoverformung, insbesondere Tiefziehen des Schichtverbunds,
- Endhärtung der Schicht teilgehärteten Lackes, insbesondere mittels UV-Strahlung.

Dabei ist es bevorzugt, daß das Abziehen der Schutzfolie vor der Thermoverformung (dem Tiefziehen) erfolgt. Insbesondere beim Einsatz nicht-thermoplastischer Schutzfolien ist das unumgänglich. Bei Verwendung thermoplastischer Schutzfolien ist es aber auch denkbar, daß diese erst nach dem Tiefziehvorgang entfernt werden, gegebenenfalls nach der Endhärtung des Lackes oder auch erst bei bzw. nach der Montage des Formteils, auf das der Schichtverbund appliziert ist.

Eine zur Verwendung im Rahmen der Erfindung geeignete härtbare Lack-Zusammensetzung umfaßt im wesentlichen 40 Gew.-% bis 100 Gew.-% eines doppelbindungshaltigen Bindemittels, mindestens ein Lack-Hilfsmittel, vorzugsweise eine Lack-Hilfsmittelkombination in einem Anteil von 0 % bis zu 15 Gew.-%, einen Lösungsmittelanteil von bis zu 60 Gew.-% sowie gegebenenfalls Pigmente und/oder Füllstoffe.

Das Bindemittel weist, wie schon erwähnt, eine Doppelbindungsdichte zwischen 3 mol/kg bis 6 mol/kg, eine Glasübergangstemperatur T_{g} im Bereich zwischen -15 °C und 20 °C, bevorzugt zwischen -10 °C und 12 °C, und einen Festkörperanteil zwischen 50 % bis 100 % auf. Unabhängig von dem erwähnten Lösungsmittelanteil von bis zu 60 Gew.-% in der erfindungsgemäßen härtbaren Lack-Zusammensetzung kann auch das Bindemittel einen Lösungsmittelanteil aufweisen.

Wie schon erwähnt, weist die härtbare Lack-Zusammensetzung vorzugsweise ein Bindemittel auf Basis von Urethanacrylat auf. Ebenfalls bereits beschrieben wurden die fakultativ enthaltenen Komponenten Lackhilfsmittel, Pigmente und/oder Füllstoffe.

Ebenfalls bereits angesprochen wurde die Nichtklebrigkeit der nach thermischer Trocknung resultierenden Lackschicht sowie im Zusammenhang damit, daß das Bindemittel insbesondere in 100 %iger Form als Feststoff vorliegt.

Als Lösungsmittel weist eine erfindungsgemäße härtbare Lack-Zusammensetzung vorzugsweise ein organisches Lösungsmittel, insbesondere einen Ester oder ein Keton, auf. Beispiele hierfür sind Butylacetat oder Methylisobutylketon (MIBK).

Ein gehärteter Lack ist durch Härtung der beschriebenen Lack-Zusammensetzung herstellbar. Er weist eine hohe Resistenz gegenüber Chemikalien wie z. B. Schwefelsäure oder Natronlauge auf. Auch Fermente wie Pankreatin führen nicht zu einer Schädigung der Lackoberfläche. Darüber hinaus verfügt er über hervorragende mechanische Eigenschaften, insbesondere über eine hohe Kratzbeständigkeit. Der Glanzgrad ist zwischen matt und hochglänzend beliebig einstellbar, ebenso wie besondere Effekte, wie z. B. Metalliceffekte.

### Beispiel 1

Eine coextrudierte Dreischicht-Verbundfolie mit der Schichtfolge ABS/ PC - PC - ABS/PC und einer Dicke von 1000 µm wird zur Verbesserung der Adhäsion zwischen den zu verbindenden Schichten einer Corona-Vorbehandlung unterzogen. Anschließend wird auf eine Seite der Verbundfolie ein Farblack (Wörwag Hydrobasislack Brilliantsilber 105628) aufgetragen. Nach einer kurzen Ablüftphase wird die mit dem Farblack beschichtete Folie in einem Umluftofen bei 110 °C über einen Zeitraum von 20 Minuten getrocknet. Es folgt eine Kühlphase von 5 Minuten bei 22 °C und 60 % relativer Luftfeuchtigkeit.

Anschließend wird in einem weiteren Arbeitsschritt auf die Schicht Hydrobasislack eine härtbare Lackzusammensetzung aufgetragen. Die härtbare Lackzusammensetzung setzt sich aus den folgenden Komponenten zusammen (Angaben in Gew.-%):
- 70 % eines härtbaren Bindemittels
- 2,0 %Irgacure 184 (Ciba Specialty Chemicals)
- 0,3 %Irgacure 819 (Ciba Specialty Chemicals)
- 0,5 %Tinuvin 400 (Ciba Specialty Chemicals)
- 0,7 %Tinuvin 292 (Ciba Specialty Chemicals)
- 2,0 %Tegoglide 435 (Tego Chemie)
- 2,0 %Byk 051 (Byk-Chemie)
- 22,5 % Lösungsmittel.

Beim Bindemittel handelt es sich um ein Bindemittel auf Urethanacrylat-Basis, es weist eine Glasübergangstemperatur T_{g} von 10 °C, eine Doppelbindungsdichte von 4,5 mol/kg und einen Festkörperanteil von 70 % auf. Bei Irgacure 184 und Irgacure 819 handelt es sich um handelsübliche Photoinitiatoren, bei Tinuvin 400 und Tinuvin 292 um handelsübliche UV-Absorber. Tegoglide 435 und Byk 051 sind dem Fachmann bekannte Oberflächenadditive. Als Lösungsmittel kommt Butylactetat zum Einsatz. Unabhängig davon enthält auch das Bindemittel als Lösungsmittel einen Anteil an Butylacetat.

Auf das Auftragen dieser Lackzusammensetzung folgt eine Ablüftphase über einen Zeitraum von 15 Minuten bei 22 °C und 60 % relativer Luftfeuchtigkeit. In einem weiteren Arbeitsschritt wird die nun mit 2 Schichten Lack versehene Folie bei 100 °C getrocknet. Dabei erfolgt eine teilweise Härtung des Bindemittels und damit verbunden auch des Lackes. Es folgt eine Kühlphase über einen Zeitraum von 5 Minuten bei 22 °C und 60 % relativer Luftfeuchtigkeit. Die erhaltene Lackfolie weist an der Oberfläche einen im wesentlichen staubtrockenen Lackfilm auf. Auf diesen Lackfilm wird anschließend bei einer Temperatur von 50 °C eine Schutzfolie aus Polyethylenterephtalat mit einer Dicke von 50 µm kaschiert. Die Schutzfolie haftet ohne Klebstoff fest auf dem Lackfilm, läßt sich jedoch auch ohne Probleme wieder abziehen, ohne daß es dabei zu optischen Schäden der wieder freigelegten Lackoberfläche kommt.

In der so hergestellten Lackfolie weist die Farblackschicht eine Schichtdicke von 7 µm bis 60 µm auf. Die Schichtdicke des teilgehärteten Lackfilms beträgt, ebenfalls verstreckungabhängig, zwischen 35 µm und 70 µm (vor Thermoverformung). Die genannten Werte beziehen sich auf eine Lackfolie vor Thermoverformung, die Schichtdicken sind grundsätzlich farbton- und verstreckungsabhängig und können demgemäß variieren.

### Beispiel 2

Die Ermittlung der Restklebrigkeit bzw. des Trockengrads des getrockneten Lackfilms wurde durchgeführt wie folgt:

Analog zu Beispiel 1 wurde nach dem Auftragen des Hydrobasislacks auf eine Folie die in Beispiel 1 beschriebene härtbare Lackzusammensetzung appliziert. Die resultierende Lackschicht wurde thermisch getrocknet (15 min bei Raumtemperatur, 20 min bei 100 °C). Dann wurde das Prüfteil auf 10 °C abgekühlt. Es folgte eine Belastung des Prüfteils mit einem Gewicht über einen Zeitraum von 60 sec bei einer Temperatur von 10 °C. Zwischen Gewicht und Prüfteil befand sich eine Gummischeibe sowie Filterpapier, letzteres lag unmittelbar auf dem Prüfteil auf. Aus der Masse des Gewichts und der Auflagefläche (Fläche der Gummischeibe) ergibt sich die spezifische Belastung. Eine Bewertung erfolgte anhand der folgenden Tabelle:

| Trockengrad | Spezifische Belastung [g/cm2] / Belastungszeit | Bewertung |
|---|---|---|
| 1 | Aufstreuen von Glasperlen | Die Glasperlen lassen sich mit einem weichen Haarpinsel leicht und restlos wieder entfernen |
| 2 | 5 / 60s | Das Papier klebt nicht an der Beschichtung |
| 3 | 50 / 60s | Das Papier klebt nicht an der Beschichtung |
| 4 | 500 / 60s | Das Papier klebt nicht an der Beschichtung, eine Veränderung (z.B. Abprägung) ist auf der Oberfläche erkennbar |
| 5 | 500 / 60s | Das Papier klebt nicht an der Beschichtung, eine Veränderung (z.B. Abprägung) ist auf der Oberfläche nicht erkennbar |

Die Lackschicht wies einen Trockengrad von 4 auf.

Eine Lackschicht, die in Abweichung auf einem Bindemittel mit einem T_{g}-Wert von -10 °C basiert, wies dem Test zufolge einen Trockengrad von 2 auf. Störungsfreies Aufbringen und Abziehen einer Schutzfolie war auch in diesem Fall gewährleistet.

### Beispiel 3

Zur Herstellung eines mit einer Lackfolie beschichteten Formteils aus Kunststoff wird von einer gemäß Beispiel 1 hergestellten Lackfolie die aufkaschierte Schutzfolie abgezogen. Die Lackfolie wird in eine Tiefziehform eingelegt. Die Thermoverformung erfolgt auf übliche Art und Weise. Nach dem Tiefziehvorgang wird der teilgehärtete Lackfilm mittels UV-Strahlung endgehärtet. Danach wird die endgehärtete Lackfolie in eine Spritzgießform eingelegt und auf übliche Weise mit einem Kunststoff hinterspritzt.

### Beispiel 4

Zur Herstellung eines mit einer Lackfolie beschichteten Formteils aus Kunststoff wird von einer gemäß Beispiel 1 hergestellten Lackfolie die aufkaschierte Schutzfolie abgezogen. Die Lackfolie wird in eine Tiefziehform eingelegt. Die Thermoverformung erfolgt auf übliche Art und Weise. Nach dem Tiefziehvorgang wird der teilgehärtete Lackfilm mittels UV-Strahlung endgehärtet. Danach wird die endgehärtete Lackfolie auf übliche Weise mit einem Kunststoff hinterschäumt.

### Beispiel 5

Ein zur Herstellung einer geeigneten härtbaren Lack-Zusammensetzung geeignetes, urethanbasiertes Bindemittel weist bevorzugt folgende Isocyanat-Bestandteile in folgenden Anteilen auf:

| | |
|---|---|
| Allophanat aus HDI und HEA | 55 mol% NCO |
| Isocyanurat (auf Basis IPDI) | 45 mol% NCO. |

Bei den Kürzeln HDI, HEA und IPDI handelt es sich um gebräuchliche Abkürzungen für die Verbindungen Hexamethylendiisocyanat, Hydroxyethylacrylat und Isophorondiisocyanat. Die Angaben in Molprozent beziehen sich jeweils auf den Gesamtanteil an NCO-Gruppen im Bindemittel.

An Alkoholen weist das Bindemittel bevorzugt folgende Bestandteile in folgenden Anteilen auf:

| | | |
|---|---|---|
| Dicyclohexanolpropan | 40 | mol% OH |
| Hydroxyethylacrylat | 27,5 | mol% OH |
| Pentaerythrit-tri/tetra-acrylat | 27,5 | mol% OH |
| Methanol | 5 | mol% OH. |

Analog zu den Angaben zu den Isocyanat-Bestandteilen beziehen sich auch hier die angegebenen Molprozent jeweils auf den Gesamtanteil an OH-Gruppen im Bindemittel.

Es ist besonders bevorzugt, daß die alkoholische Komponente des Bindemittels equimolar zur Isocyanat-Komponente vorliegt, der Gesamtanteil der OH-Gruppen im Bindemittel also dem Gesamtanteil der NCO-Gruppen entspricht.

Zusätzlich zu den genannten alkoholischen und den Isocyanat-Bestandteilen weist das Bindemittel üblicherweise noch die folgenden Bestandteile auf:

| | | |
|---|---|---|
| Hydrochinonmonomethylether | 0,05 | Gew.-% |
| 1,6-di-tert-Butyl-para-Kresol | 0,1 | Gew.-% |
| Dibutylzinndilaurat | 0,04 | Gew.-%. |

Die angegebenen Gewichtsprozent beziehen sich auf den Festkörperanteil des Bindemittels (die Summe aus allen OH- und allen NCO-Bestandteilen).

Nach einer allgemeinen Arbeitsvorschrift zur Herstellung des Bindemittels aus den genannten Bestandteilen wird Dicyclohexanolpropan bei 60 °C unter Rühren in Hydroxyethylacrylat dispergiert. Dazu werden die I-socyanat-Bestandteile sowie Hydrochinonmonomethylether und 1,6-di-tert-Butyl-para-Kresol gegeben sowie das Lösungsmittel Butylacetat. Das Lösungsmittel wird üblicherweise in einer Menge zugegeben, so daß der Festkörperanteil im Bindemittel 70 Gew.-% beträgt. Die nachfolgende Zugabe von Dibutylzinndilaurat hat gewöhnlich eine Erwärmung des Ansatzes zur Folge. Bei einer Innentemperatur von 75 °C wird gegebenenfalls mehrere Stunden gerührt, bis der NCO-Wert der Reaktionsmischung im wesentlichen konstant bleibt. Dann erfolgt die Zugabe von Methanol, bis der NCO-Wert des Ansatzes 0 % erreicht. Gegebenenfalls kann die Menge an Methanol den oben angegebenen Anteil leicht unter- bzw. überschreiten.

Die Eigenschaften eines so hergestellten Bindemittels (70 %ige Lösung in Butylacetat) wurden wie folgt bestimmt:
Viskosität η = 6,6 Pa·s (bei Raumtemperatur)
Glasübergangstemperatur T_{g} = 11,3 °C.
Doppelbindungsdichte (Hydrierjodzahl) = 77 g lod/100 g (entspricht einer Doppelbindungsdichte des reinen Bindemittels von 4,33 mol/kg; als theoretische Doppelbindungsdichte des reinen Bindemittels wurden 4,41 mol/kg errechnet)

Zur Bestimmung der Hydrierjodzahl wurde eine Probe des Bindemittels in Eisessig gelöst und bei 30 °C an auf BaSO₄ geträgertem Palladium hydriert. Aus der Wasserstoffaufnahme wurde die Jodzahl und daraus die Doppelbindungsdichte berechnet.

## Patentansprüche

1. Flexibler Schichtverbund mit einem Träger und mindestens einer auf den Träger aufgebrachten Schicht härtbaren Lackes, wobei die Schicht härtbaren Lackes
- ein doppelbindungshaltiges Bindemittel mit einer Doppelbindungsdichte zwischen 3 mol/kg bis 6 mol/kg, mit einer Glasübergangstemperatur T_{g} zwischen -15 °C bis 20 °C und mit einem Festkörperanteil zwischen 40 % und 100 %,
- gegebenenfalls mindestens ein Lack-Hilfsmittel, vorzugsweise eine Lack-Hilfsmittelkombination,
- gegebenenfalls Lösungsmittel und
- gegebenenfalls Pigmente und/oder Füllstoffe
aufweist und nach thermischer Trocknung nicht klebrig ist, wobei es sich bei dem Bindemittel um ein Bindemittel auf Basis von Urethanacrylat handelt und auf der Schicht härtbaren Lackes mindestens eine entfernbare Schutzfolie aufgebracht ist.

2. Schichtverbund nach Anspruch 1, **dadurch gekennzeichnet, daß** das Bindemittel eine Glasübergangstemperatur T_{g} zwischen -10 °C und 12 °C aufweist.

3. Schichtverbund nach Anspruch 1 oder Anspruch 2 , **dadurch gekennzeichnet, daß** es sich bei dem 100 %igen Bindemittel um einen Feststoff handelt.

4. Schichtverbund nach einem der vorhergehenden Ansprüche, **dadurch gekennzeichnet, daß** die entfernbare Schutzfolie eine Dicke zwischen 10 µm und 100 µm, vorzugsweise zwischen 20 µm und 60 µm, aufweist.

5. Schichtverbund nach einem der vorhergehenden Ansprüche, **dadurch gekennzeichnet, daß** es sich bei der entfernbaren Schutzfolie um eine einschichtige oder mehrschichtige Folie handelt.

6. Schichtverbund nach einem der vorhergehenden Ansprüche , **dadurch gekennzeichnet, daß** es sich bei der entfernbaren Schutzfolie um eine Kunststoff-Folie, insbesondere um eine Folie auf Basis von Polyester, Polyolefinen, Polycarbonaten, Acrylnitril-Butadien-Styrol (ABS), Acryl-Styrol-Acrylnitril (ASA), Acrylnitril-Butadien-Styrol/Polycarbonat (ABS/PC), Acryl-Styrol-Acrylnitril/Polycarbonat (ASA/ PC) und/oder Polycarbonat/Polybutylenterephthalat (PC/PBT), handelt.

7. Schichtverbund nach einem der vorhergehenden Ansprüche, **dadurch gekennzeichnet, daß** es sich bei dem Träger um eine einschichtige oder mehrschichtige Folie handelt.

8. Schichtverbund nach Anspruch 7, **dadurch gekennzeichnet, daß** es sich bei der Folie um eine Kunststoff-Folie, insbesondere um eine Folie auf Basis von Polyolefinen, Polycarbonaten, Acrylnitril-Butadien-Styrol (ABS), Acryl-Styrol-Acrylnitril (ASA), Acrylnitril-Butadien-Styrol/Polycarbonat (ABS/PC), Acryl-Styrol-Acrylnitril/Polycarbonat (ASA/PC) und/oder Polycarbonat/Polybutylenterephthalat (PC/PBT), handelt.

9. Schichtverbund nach Anspruch 7 oder Anspruch 8, **dadurch gekennzeichnet, daß** die Folie Pigmente enthält.

10. Schichtverbund nach einem der vorhergehenden Ansprüche, **dadurch gekennzeichnet, daß** die Schicht härtbaren Lackes thermisch härtbar ist.

11. Schichtverbund nach einem der vorhergehenden Ansprüche, **dadurch gekennzeichnet, daß** die Schicht härtbaren Lackes mittels Strahlung, insbesondere mittels UV-Strahlung, härtbar ist.

12. Schichtverbund nach einem der vorhergehenden Ansprüche, **dadurch gekennzeichnet, daß** die Schicht härtbaren Lackes eine Dicke zwischen 10 µm und 150 µm, vorzugsweise zwischen 30 µm und 70 µm, aufweist.

13. Schichtverbund nach einem der vorhergehenden Ansprüche, **dadurch gekennzeichnet, daß** die Schicht härtbaren Lackes direkt auf den Träger aufgebracht ist.

14. Schichtverbund nach einem der Ansprüche 1 bis 12, **dadurch gekennzeichnet, daß** sich zwischen dem Träger und der Schicht härtbaren Lackes mindestens eine weitere Lackschicht, insbesondere eine farb- und/oder effektgebende Lackschicht, befindet.

15. Schichtverbund nach Anspruch 13 mit folgender Schichtfolge:
- Träger,
- mindestens eine, vorzugsweise eine Schicht härtbaren Lackes,
- mindestens eine, vorzugsweise eine entfernbare Schutzfolie.

16. Schichtverbund nach Anspruch 14 mit folgender Schichtfolge:
- Träger,
- mindestens eine weitere Lackschicht, insbesondere mindestens eine farb- und/oder effektgebende Lackschicht,
- mindestens eine, vorzugsweise eine Schicht härtbaren Lackes,
- mindestens eine, vorzugsweise eine entfernbare Schutzfolie.

17. Schichtverbund nach einem der vorhergehenden Ansprüche, **dadurch gekennzeichnet, daß** er zur einseitigen Applikation, vorzugsweise durch Hinterspritzen, Hinterschäumen oder durch Verklebung, vorgesehen ist, vorzugsweise auf der der aufgebrachten Schicht härtbaren Lackes abgewandten Seite des Trägers.

18. Schichtverbund nach Anspruch 17, **dadurch gekennzeichnet, daß** er zur vollflächigen Applikation vorgesehen ist.

19. Verwendung eines Schichtverbunds nach einem der vorhergehenden Ansprüche zur Beschichtung eines dreidimensionalen Formkörpers.

20. Verwendung nach Anspruch 19, **dadurch gekennzeichnet, daß** es sich bei dem dreidimensionalen Formkörper um eine Fahrzeugkarosserie oder ein Teil hiervon handelt.

21. Dreidimensionaler Formkörper, beschichtet mit einem Schichtverbund nach einem der Ansprüche 1 bis18.

22. Verwendung eines Schichtverbunds nach einem der Ansprüche 1 bis 18 in einem mehrstufigen Applikationsverfahren mit folgenden Schritten:
- Entfernen, vorzugsweise Abziehen der Schutzfolie von der Schicht härtbaren Lackes,
- Thermoverformung, insbesondere Tiefziehen des Schichtverbunds,
- Endhärtung der Schicht härtbaren Lackes, insbesondere mittels UV-Strahlung.

## Claims

1. A flexible laminated composite comprising a support and at least one layer of curable surface coating composition applied to the support, wherein the layer of curable surface coating composition comprises
- a binder which contains double bonds and has a double bond density in the range from 3 mol/kg to 6 mol/kg, a glass transition temperature T_{g} in the range from -15°C to 20°C and a solids content in the range from 40% to 100%,
- if appropriate at least one surface coating auxiliary, preferably a surface coating auxiliary combination,
- if appropriate solvents and
- if appropriate pigments and/or fillers,
and is not sticky after thermal drying, wherein the binder is a binder based on urethane acrylate and at least one removable protective film has been applied to the layer of curable surface coating composition.

2. The laminated composite according to claim 1, **characterized in that** the binder has a glass transition temperature T_{g} in the range from -10°C to 12°C.

3. The laminated composite according to claim 1 or claim 2, **characterized in that** the 100% binder is a solid.

4. The laminated composite according to any one of the preceding claims, **characterized in that** the removable protective film has a thickness in the range from 10 µm to 100 µm, preferably from 20 µm to 60 µm.

5. The laminated composite according to any one of the preceding claims, **characterized in that** the removable protective film is a single-layer or multilayer film.

6. The laminated composite according to any one of the preceding claims, **characterized in that** the removable protective film is a plastic film, in particular a film based on polyesters, polyolefins, polycarbonates, acrylonitrile-butadiene-styrene (ABS), acrylic-styrene-acrylonitrile (ASA), acrylonitrile-butadiene-styrene/polycarbonate (ABS/PC), acrylic-styrene-acrylonitrile/polycarbonate (ASA/PC) and/or polycarbonate/polybutylene terephthalate (PC/PBT).

7. The laminated composite according to any one of the preceding claims, **characterized in that** the support is a single-layer or multilayer film.

8. The laminated composite according to claim 7, **characterized in that** the film is a plastic film, in particular a film based on polyolefins, polycarbonates, acrylonitrile-butadiene-styrene (ABS), acrylic-styrene-acrylonitrile (ASA), acrylonitrile-butadiene-styrene/polycarbonate (ABS/PC), acrylic-styrene-acrylonitrile/polycarbonate (ASA/PC) and/or polycarbonate/polybutylene terephthalate (PC/PBT).

9. The laminated composite according to claim 7 or claim 8, **characterized in that** the film contains pigments.

10. The laminated composite according to any one of the preceding claims, **characterized in that** the layer of curable surface coating composition is thermally curable.

11. The laminated composite according to any one of the preceding claims, **characterized in that** the layer of curable surface coating composition is curable by means of radiation, in particular by means of UV radiation.

12. The laminated composite according to any one of the preceding claims, **characterized in that** the layer of curable surface coating composition has a thickness in the range from 10 µm to 150 µm, preferably from 30 µm to 70 µm.

13. The laminated composite according to any one of the preceding claims, **characterized in that** the layer of curable surface coating composition has been applied directly to the support.

14. The laminated composite according to any one of claims 1 to 12, **characterized in that** at least one further surface coating layer, in particular a color- and/or effect-imparting surface coating layer, is present between the support and the layer of curable surface coating composition.

15. The laminated composite according to claim 13 having the following sequence of layers:
- support,
- at least one, preferably one, layer of curable surface coating composition,
- at least one, preferably one, removable protective film.

16. The laminated composite according to claim 14 having the following sequence of layers:
- support,
- at least one further surface coating layer, in particular at least one color- and/or effect-imparting surface coating layer,
- at least one, preferably one, layer of curable surface coating composition,
- at least one, preferably one, removable protective film.

17. The laminated composite according to any one of the preceding claims, **characterized in that** it is intended for one-sided application, preferably by back-injection, back-foaming or adhesive bonding, preferably on the side of the support facing away from the applied layer of curable surface coating composition.

18. The laminated composite according to claim 17, **characterized in that** it is intended for full-area application.

19. The use of a laminated composite according to any one of the preceding claims for coating a three-dimensional shaped body.

20. The use according to claim 19, **characterized in that** the three-dimensional shaped body is a vehicle bodywork or a part thereof.

21. A three-dimensional shaped body coated with a laminated composite according to any one of claims 1 to 18.

22. The use of a laminated composite according to any one of claims 1 to 18 in a multiple stage application process having the following steps:
- removal, preferably pulling-off, of the protective film from the layer of curable surface coating composition,
- thermoforming, in particular deep drawing, of the laminated composite,
- final curing of the layer of curable surface coating composition, in particular by means of UV radiation.

## Revendications

1. Composite laminé souple avec un support et au moins une couche de vernis durcissable appliquée sur le support, la couche de vernis durcissable comportant
- un agent liant contenant des doubles liaisons avec une densité de double liaison comprise entre 3 moles/kg et 6 moles/kg, avec une température de vitrification T_{g} comprise entre -15 °C et 20 °C et avec une part en matière solide comprise entre 40 % et 100 %,
- le cas échéant au moins un auxiliaire de vernis, de préférence une association d'auxiliaires de vernis,
- le cas échéant des solvants et
- le cas échéant des pigments et/ou des agents de charge
et n'étant pas collante après un thermoséchage, l'agent liant étant un agent liant sur base d'acrylate d'uréthane et sur la couche de vernis durcissable étant appliqué au moins un film protecteur pelliculable.

2. Composite laminé selon la revendication 1, **caractérisé en ce que** l'agent liant présente une température de vitrification T_{g} comprise entre -10 °C et 12 °C.

3. Composite laminé selon la revendication 1 ou 2, **caractérisé en ce que** l'agent liant à 100 % est un corps solide.

4. Composite laminé selon l'une quelconque des revendications précédentes, **caractérisé en ce que** le film protecteur pelliculable présente une épaisseur comprise entre 10 µm et 100 µm, de préférence entre 20 µm et 60 µm.

5. Composite laminé selon l'une quelconque des revendications précédentes, **caractérisé en ce que** le film protecteur pelliculable est un film monocouche ou multicouches.

6. Composite laminé selon l'une quelconque des revendications précédentes, **caractérisé en ce que** le film protecteur pelliculable est un film en matière plastique, notamment un film sur base de polyester, de polyoléfines, de polycarbonates, d'acrylonitrile-butadiène-styrène (ABS), d'acrylate-styrène-acrylonitrile (ASA), d'acrylonitrile-butadiène-styrène/polycarbonate (ABS/PC), d'acrylate-styrène-acrylonitrile/polycarbonate (ASA/PC) et/ou de polycarbonate/poly(téréphtalate) de butylène (PC/PBT).

7. Composite laminé selon l'une quelconque des revendications précédentes, **caractérisé en ce que** le support est un film monocouche ou multicouches.

8. Composite laminé selon la revendication 7, **caractérisé en ce que** le film est un film en matière plastique, notamment un film sur base de polyoléfines, de polycarbonates, d'acrylonitrile-butadiène-styrène (ABS), d'acrylate-styrène-acrylonitrile (ASA), d'acrylonitrile-butadiène-styrène/polycarbonate (ABS/PC), d'acrylate-styrène-acrylonitrile/polycarbonate (ASA/PC) et/ou de polycarbonate/poly(téréphtalate) de butylène (PC/PBT).

9. Composite laminé selon la revendication 7 ou 8, **caractérisé en ce que** le film contient des pigments.

10. Composite laminé selon l'une quelconque des revendications précédentes, **caractérisé en ce que** la couche de vernis durcissable est thermodurcissable.

11. Composite laminé selon l'une quelconque des revendications précédentes, **caractérisé en ce que** la couche de vernis durcissable est durcissable au moyen de rayonnement, notamment de rayonnement UV.

12. Composite laminé selon l'une quelconque des revendications précédentes, **caractérisé en ce que** la couche de vernis durcissable présente une épaisseur comprise entre 10 µm et 150 µm, de préférence entre 30 µm et 70 µm.

13. Composite laminé selon l'une quelconque des revendications précédentes, **caractérisé en ce que** la couche de vernis durcissable est appliquée directement sur le support.

14. Composite laminé selon l'une quelconque des revendications 1 à 12, **caractérisé en ce qu'**entre le support et la couche de vernis durcissable se trouve au moins une couche de vernis supplémentaire, notamment une couche de vernis coloré et/ou à effets.

15. Composite laminé selon la revendication 13, avec la séquence de couches suivante :
- support,
- au moins une couche de vernis de préférence durcissable,
- au moins un film protecteur de préférence pelliculable.

16. Composite laminé selon la revendication 14, avec la séquence de couches suivante :
- support,
- au moins une couche de vernis supplémentaire, notamment au moins une couche de vernis coloré et/ou à effets,
- au moins une couche de vernis, de préférence durcissable,
- au moins un film protecteur, de préférence pelliculable.

17. Composite laminé selon l'une quelconque des revendications précédentes, **caractérisé en ce qu'**il est prévu pour une application unilatérale, de préférence par rétro-injection, rétro-moussage ou par collage, de préférence sur la face du support qui est opposée à la couche appliquée de vernis durcissable.

18. Composite laminé selon la revendication 17, **caractérisé en ce qu'**il est prévu pour une application à pleine surface.

19. Utilisation d'un composite laminé selon l'une quelconque des revendications précédentes pour revêtir un corps moulé tridimensionnel.

20. Utilisation selon la revendication 19, **caractérisée en ce que** le corps moulé tridimensionnel est une carrosserie de véhicule ou une partie de celle-ci.

21. Corps moulé tridimensionnel, revêtu d'un composite laminé selon l'une quelconque des revendications 1 à 18.

22. Utilisation d'un composite laminé selon l'une quelconque des revendications 1 à 18 dans un procédé d'application en plusieurs étapes, présentant les étapes suivantes :
- retrait, de préférence pelage du film protecteur de la couche de vernis durcissable,
- thermoformage, notamment emboutissage du composite laminé,
- durcissement final de la couche de vernis durcissable, notamment au moyen de rayonnement UV.
